(19) Europäisches Patentamt
European Patent Office
Office européen des brevets

(11) **EP 4 460 122 A1**

(12) **EUROPEAN PATENT APPLICATION**
published in accordance with Art. 153(4) EPC

(43) Date of publication:
06.11.2024 Bulletin 2024/45

(21) Application number: 21969807.3

(22) Date of filing: 31.12.2021

(51) International Patent Classification (IPC):
*H04W 72/04* (2023.01)

(52) Cooperative Patent Classification (CPC):
H04W 72/04

(86) International application number:
PCT/CN2021/143935

(87) International publication number:
WO 2023/123462 (06.07.2023 Gazette 2023/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Beijing Xiaomi Mobile Software Co., Ltd.
Beijing 100085 (CN)

(72) Inventors:
• MU, Qin
Beijing 100085 (CN)

• HONG, Wei
Beijing 100085 (CN)
• ZHAO, Zhongyuan
Beijing 100085 (CN)
• WANG, Yuzhu
Beijing 100085 (CN)
• WANG, Jingyi
Beijing 100085 (CN)

(74) Representative: Dehns Germany Partnerschaft mbB
Theresienstraße 6-8
80333 München (DE)

(54) **BWP SWITCHING METHOD AND APPARATUS, COMMUNICATION DEVICE, AND STORAGE MEDIUM**

(57) Embodiments of the present disclosure provide a BWP switching method and device, a communication device, and a storage medium. The BWP is executed by a base station. The method comprises: sending timing indication information, the timing indication information indicating configuration timing information, and the timing information being used for determining, by a UE according to a specified duration indicated by the timing information, a related operation for BWP switching (S21).

**FIG. 2**

## Description

## TECHNICAL FIELD

This disclosure relates to, but not limited to, the technical field of communication, and in particular relates to a BWP switching method and apparatus, a communication device and a storage medium.

## BACKGROUND

The band width part (BWP) is a subset of the total bandwidth of a cell. The size of the receiving and sending bandwidth of the user equipment (UE) can be flexibly adjusted through the bandwidth adaptation in the new radio (NR), so that the receiving and sending bandwidth of the UE does not need to be as large as the bandwidth of the cell, and the UE only needs to perform corresponding operations in the BWP configured by the system.

The fifth generation communication technology (5G) NR can support BWP technology, which can save the energy consumption of UE. However, with the continuous development of Internet technology and the need to support a wide range of applications with various features in the process of turning to 5G, more practical problems related to power consumption will appear, and these problems will bring greater challenges to UE energy saving. For example, for bursty or even non-stationary traffic patterns, using the traditional BWP switching method will result in longer access delay and/or higher power consumption.

## SUMMARY

Embodiments of this disclosure provide a BWP switching method and apparatus, a communication device, and a storage medium.

According to a first aspect of this disclosure, a BWP switching method is provided, which is performed by a base station and includes:
sending timing indication information, where the timing indication information indicates configuration of timing information, and the timing information is used for UE to determine a related operation of BWP switching according to a specified duration indicated by the timing information.

According to a second aspect of this disclosure, a BWP switching method is provided, which is performed by a UE and includes:

receiving timing indication information;
configuring timing information based on the timing indication information; and
determining a related operation of BWP switching based on a specified duration indicated by the timing information.

According to a third aspect of this disclosure, a BWP switching apparatus is provided, which is applied to a base station and includes:
a first sending module, configured to send timing indication information, where the timing indication information indicates configuration of timing information, and the timing information is used for UE to determine a related operation of BWP switching according to a specified duration indicated by the timing information.

According to a fourth aspect of this disclosure, a BWP switching apparatus is provided, which is applied to a UE and includes:

a second receiving module, configured to receive timing indication information;
a processing module, configured to configure timing information based on the timing indication information; and
a second determining module, configured to determine a related operation of BWP switching based on a specified duration indicated by the timing information.

According to a fifth aspect of this disclosure, a communication device is provided, including:

a processor; and
a memory, configured to store executable instructions of the processor,
where the processor is configured to, upon running the executable instructions, implement the BWP switching method according to any embodiment of this disclosure.

According to a sixth aspect of this disclosure, a computer storage medium is provided, storing a computer-executable program which, upon being executed by a processor, is used for implementing the BWP switching method according to any embodiment of this disclosure.

The technical solutions provided by some embodiments of this disclosure may include the following beneficial effects.

In some embodiments of this disclosure, the base station may send timing indication information to the UE, where the timing indication information indicates configuration of timing information, and the timing information is used for the UE to determine a related operation of BWP switching according to the specified duration indicated by the timing information. In this way, the base station can flexibly configure the specified duration of operations related to BWP switching for the UE (for example, configuring the duration of using an active BWP by the UE), so that the UE can flexibly adjust the specified duration of operations related to BWP switching. For example, adaptive BWP switching can be implemented according to traffic patterns. Accordingly, the delay caused by untimely BWP switching, or the high power consumption caused by always operating in a relatively large bandwidth can be reduced.

It should be understood that both the foregoing general description and the following detailed description are exemplary and explanatory only, and are not intended to limit the embodiments of this disclosure.

## BRIEF DESCRIPTION OF THE DRAWINGS

FIG. 1 is a schematic structural diagram of a wireless communication system.

FIG. 2 is a flow chart showing a BWP switching method according to an exemplary embodiment of this disclosure.

FIG. 3 is a schematic diagram showing a BWP switching according to an exemplary embodiment of this disclosure.

FIG. 4 is a schematic diagram showing a BWP switching according to an exemplary embodiment of this disclosure.

FIG. 5 is a flow chart showing a BWP switching method according to an exemplary embodiment of this disclosure.

FIG. 6 is a flow chart showing a BWP switching method according to an exemplary embodiment of this disclosure.

FIG. 7 is a schematic diagram of an evaluation network according to an exemplary embodiment of this disclosure.

FIG. 8 is a schematic diagram of an action network according to an exemplary embodiment of this disclosure.

FIG. 9 is a flow chart showing a BWP switching method according to an exemplary embodiment of this disclosure.

FIG. 10 is a flow chart showing a BWP switching method according to an exemplary embodiment of this disclosure.

FIG. 11 is a flowchart showing a BWP switching method according to an exemplary embodiment of this disclosure.

FIG. 12 is a flow chart showing a BWP switching method according to an exemplary embodiment of this disclosure.

FIG. 13 is a block diagram showing a BWP switching apparatus according to an exemplary embodiment of this disclosure.

FIG. 14 is a block diagram showing a BWP switching apparatus according to an exemplary embodiment of this disclosure.

FIG. 15 is a block diagram of a UE according to an exemplary embodiment.

FIG. 16 is a block diagram of a base station according to an exemplary embodiment.

## DETAILED DESCRIPTION

Reference will now be made in detail to the exemplary embodiments, examples of which are illustrated in the accompanying drawings. Where the following description refers to the accompanying drawings, the same numerals in different drawings refer to the same or similar elements unless otherwise indicated. The implementations described in the following exemplary embodiments do not represent all implementations consistent with the embodiments of this disclosure. Rather, they are merely examples of apparatuses and methods consistent with aspects of the disclosed embodiments as recited in the appended claims.

Terms used in the embodiments of this disclosure are for the purpose of describing specific embodiments only, and are not intended to limit the embodiments of this disclosure. As used in the examples of this disclosure and the appended claims, the singular forms "a" and "the" are also intended to include the plural forms unless the context clearly dictates otherwise. It should also be understood that the term "and/or" as used herein refers to and includes any and all possible combinations of one or more of the associated listed items.

It should be understood that although the embodiments of this disclosure may use the terms "first", "second", "third", etc. to describe various information, the information should not be limited to these terms. These terms are only used to distinguish information of the same type from one another. For example, without departing from the scope of the embodiments of this disclosure, first information may also be called second information, and similarly, second information may also be called first information. Depending on the context, the word "if" as used herein may be interpreted as "upon" or "when" or "in response to determining that... "

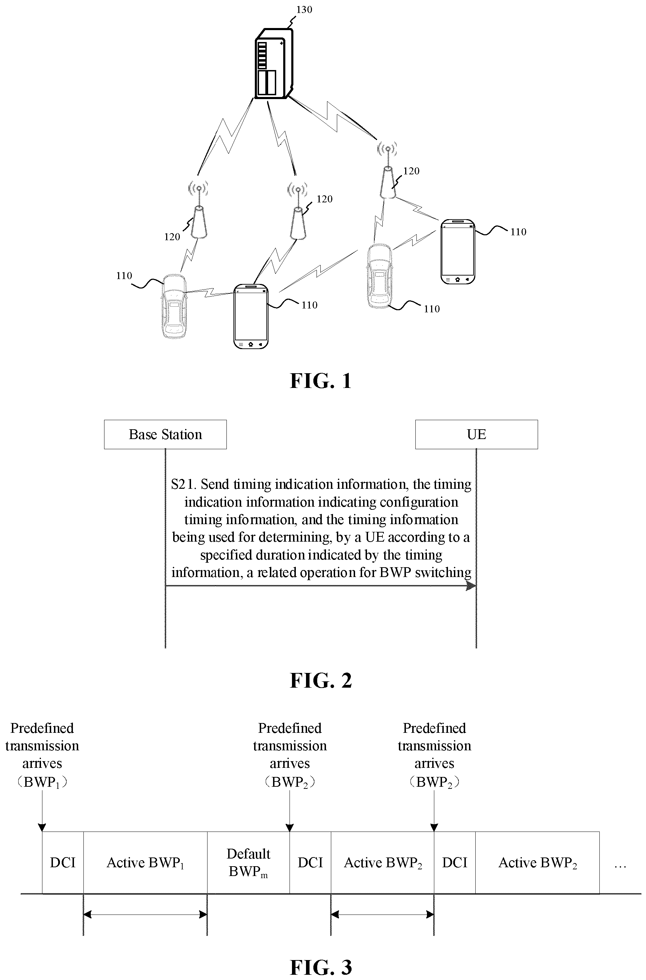

Referring to FIG. 1, which shows a schematic structural diagram of a wireless communication system according to an embodiment of this disclosure. As shown in FIG. 1, the wireless communication system is a communication system based on cellular mobile communication technology, and the wireless communication system may include: several user equipments (UEs) 110 and several base stations 120.

In some embodiments, the UE 110 may be a device that provides voice and/or data connectivity to the user. The UE 110 can communicate with one or more core networks via a radio access network (RAN), and the UE 110 can be an Internet of things (IoT) UE, such as a sensor device, a mobile phone (or called "cellular" phone), and a computer with an IoT UE. For example, it may be a fixed, portable, pocket, hand-held, computer built-in, or vehicle-mounted device, such as station (STA), subscriber unit, subscriber station, mobile station, mobile, remote station, access point, remote terminal, access terminal, user terminal, user agent, user device, or user equipment. Alternatively, the UE 110 may also be equipment of an unmanned aerial vehicle. Alternatively, the UE 110 may also be a vehicle-mounted device, for example, a trip computer with a wireless communication function, or a wireless user device connected externally to the trip computer. Alternatively, the UE 110 may also be a roadside device, for example, a street lamp, a signal lamp, or other roadside devices with a wireless communication function.

The base station 120 may be a network side device in the wireless communication system. In some embodiments, the wireless communication system may be the 4th generation mobile communication (4G) system, also known as the Long Term Evolution (LTE) system. Alternatively, the wireless communication system may also be the 5G system, also known as new air interface system or 5G NR system. Alternatively, the wireless communication system may also be a next-generation system of the 5G system. In some embodiments, the access network in the 5G system can be called NG-RAN (New Generation-Radio Access Network).

In some embodiments, the base station 120 may be an evolved node-B (eNB) adopted in the 4G system. Alternatively, the base station 120 may also be a gNB adopting a centralization-distributed architecture in the 5G system. When the base station 120 adopts the centralization-distributed architecture, it generally includes a central unit (CU) and at least two distributed units (DUs). The CU is provided with a packet data convergence protocol (PDCP) layer, a radio link layer (RLC) protocol layer, a media access control (MAC) layer protocol stack; and the DU is provided with a physical (PHY) layer protocol stack. Embodiments of this disclosure do not limit the specific implementation of the base station 120.

A wireless connection may be established between the base station 120 and the UE 110 through a wireless air interface. In different embodiments, the wireless air interface is a wireless air interface based on the 4G standard; alternatively, the wireless air interface is a wireless air interface based on the 5G standard, for example, a new air interface; alternatively, the wireless air interface may also be a wireless air interface based on a technical standard of a next-generation mobile communication network based on 5G.

In some embodiments, an E2E (End to End) connection may also be established between UEs 110, for example, in the scenarios including V2V (vehicle to vehicle) communication, V2I (vehicle to Infrastructure) communication and V2P (vehicle to pedestrian) communication in V2X (vehicle to everything) communication.

Here, the forgoing UE may be regarded as the terminal device in the following embodiments.

In some embodiments, the foregoing wireless communication system may further include a network management device 130.

Several base stations 120 are connected to the network management device 130 respectively. In some embodiments, the network management device 130 may be a core network device in the wireless communication system, for example, the network management device 130 may be an MME (Mobility Management Entity) in an EPC (Evolved Packet Core) network. Alternatively, the network management device can also be other core network devices, such as SGW (Serving Gate Way), PGW (Public Data Network Gate Way), PCRF (Policy and Charging Rules Function), HSS (Home Subscriber Server), or the like. The implementation manner of the network management device 130 is not limited in embodiments of this disclosure.

In order to facilitate the understanding of those skilled in the art, the embodiments of this disclosure list a plurality of implementation manners to clearly illustrate the technical solutions according to some embodiments of this disclosure. Those skilled in the art can understand that the multiple implementation manners provided by the embodiments of this disclosure can be performed independently, or combined with the methods of other implementation manners in the embodiments of this disclosure, and can also be performed alone or in combination together with some other methods in related art, which is not limited in the embodiments of this disclosure.

In order to better understand the technical solution described in any embodiment of this disclosure, content related to band width part (BWP) is partially described first.

In some embodiments, according to the terminal capability of UE, the UE can support one or more BWPs. For example, the UE can support 1 BWP or 2 BWPs or 4 BWPs. Here, the UE can activate one BWP in each time period, and receive control information and the like on the active BWP. In some embodiments of this disclosure, "a plurality of" or "multiple" refers to 2 or more than 2.

In some embodiments, BWP includes at least one of the following: initial BWP, active BWP, and default BWP. Here, the initial BWP can be used for initial access; the active BWP can be used to process services after the initial access is completed; and the default BWP can be used to reduce power consumption when there is no service for a long time.

In some embodiments, the UE can perform switching between different BWPs. For example, an active BWP can be switched to the default BWP, thereby reducing power consumption and achieving the purpose of energy saving compared with always operating on the active BWP.

In some embodiments, a switching manner based on physical downlink control information (DCI) is provided. For example, the base station sends a DCI indicating an active BWP to the UE; if the UE receives the DCI, the UE can be triggered to perform BWP switching based on the active BWP indicated in the DCI and the current switched BWP of the UE.

In some other embodiments, a BWP switching manner based on a fixed duration is provided. For example, the base station sends a radio resource control (RRC) signaling carrying a fixed duration to the UE; if the UE receives the RRC signaling, it can perform BWP switching based on the fixed duration carried in the RRC signaling. For example, if the UE does not receive DCI within the fixed duration, it will switch to the default BWP after the fixed duration; or if the UE receives DCI before the fixed duration expires, it will switch to an active BWP indicated by the DCI and restart the timer for timing; or if the UE receives DCI upon switching to the default BWP, it will switch to the active BWP indicated by the DCI.

As shown in FIG. 2, some embodiments of this disclosure provide a BWP switching method, which is performed by a base station and includes followings.

In step S21, timing indication information is sent, where the timing indication information indicates configuration of timing information, and the timing information is used for UE to determine a related operation of BWP switching according to a specified duration indicated by the timing information.

The base station may be various types of base stations, for example, it may be a 2G base station, a 3G base station, a 4G base station, a 5G base station or other evolved base stations.

In some embodiments of this disclosure, the BWP switching method may also be performed by a network device other than the base station. For example, it may be performed by an access network device other than the base station, or by a core network device. Here, the core network device may be various network functions (NFs), such as access and mobility management function (AMF). For example, if the BWP switching method is performed by a core network device, the core network device may send the timing indication information to the base station, and the base station forwards the timing indication information to the UE.

The step S21 may include sending timing indication information to the UE. The UE may be various terminals, including for example, but not limited to, a mobile phone, a computer, a server, a wearable device, a game control platform, or a multimedia device.

The timing information indicates a specified duration, and the specified duration is a duration for BWP switching.

In this step S21, said determining the related operation of BWP switching according to the specified duration indicated by the timing information includes at least one of the following operations:

　　switching to a second BWP when no predefined transmission occurs within the specified duration of using a first BWP, where a bandwidth of the second BWP is smaller than a bandwidth of the first BWP; or when the predefined transmission occurs within the specified duration of using the first BWP, using the first BWP indicated by the predefined transmission or a third BWP of a same type as the first BWP, and re-determining timing of the specified duration, where a bandwidth of the third BWP is greater than the bandwidth of the second BWP.

Here, said using the first BWP indicated by the predefined transmission or the third BWP of the same type as the first BWP includes: continuing to operate on the first BWP, or switching to the third BWP.

In some embodiments, the first BWP or the third BWP can be the active BWP mentioned in the forgoing embodiments; the second BWP can be the default BWP mentioned in the forgoing embodiments; and the bandwidth of the active BWP is greater than the bandwidth of the default BWP.

The predefined transmission includes at least one of the following:

　　BWP scheduling information;
　　service transmission of the first BWP.

The BWP scheduling information includes at least one of the following:

　　scheduling information of the first BWP;
　　scheduling information of the third BWP, where the third BWP and the first BWP belong to the same type of BWPs, and have a larger bandwidth than the second BWP.

In some embodiments, before the step S21, the method includes: sending BWP configuration information to the UE.

Some embodiments of this disclosure provide a BWP switching method, which is performed by a base station and may include: sending BWP configuration information to the UE.

The BWP configuration information includes: at least one active BWP and one default BWP. Here, at least one active BWP includes: at least one first BWP and/or at least one second BWP.

Exemplarily, the base station sends the BWP configuration information to the UE, where the BWP configuration information can be used to indicate the default BWP and an active BWP that the UE switches to. If the UE switches to the active BWP and a service request occurs at the UE, the UE performs service transmission one the active BWP. If the UE switches to the default BWP and has no service request, the UE performs DCI monitoring on the default BWP to maintain the basic connection.

Exemplarily, the base station may configure m BWPs for the UE by sending BWP configuration information indicating BWPs to the UE. For example, the base station sends BWP configuration information indicating m BWPs to the UE, where the BWP configuration information is used for the UE to configure m BWPs. Here, the m BWPs can be respectively marked as: $BWP_1$, $BWP_2$, ..., $BWP_{m-1}$, and $BWP_m$, where $BWP_1$, $BWP_2$, ..., and $BWP_{m-1}$ are active BWPs, $BWP_m$ is the default BWP, and m is an integer greater than 1.

The BWP configuration information can be sent through RRC signaling or DCI signaling.

The specified duration may be determined by the base station. The specified duration may be any duration, or may be the duration of one service transmission, or may be longer than the duration of one service transmission. In some embodiments, the timing information includes the specified duration.

The timing information may be used for the UE to switch to the second BWP when there is no predefined transmission within the specified duration of using the first BWP. For example, as shown in FIG. 3, if the UE has no predefined transmission arriving within the specified duration (T') of using the active BWP ($BWP_1$), then the UE switches to the default BWP ($BWP_m$) when the specified duration of using $BWP_1$ expires.

The timing information may be used for the UE to switch to a scheduled BWP indicated by BWP scheduling information when the BWP scheduling information occurs within the specified duration of using the first BWP, and to re-determine timing of the specified duration.

The scheduled BWP indicated by the BWP scheduling information may be the first BWP or the second BWP or any BWP of the same type as the first BWP.

Exemplarily, the timing information may be used for the UE to continue operating on the first BWP when there is scheduling information of the first BWP within the specified duration of using the first BWP, and to re-determine timing of the specified duration. For example, as shown in FIG. 3, the UE has scheduling information of the active BWP ($BWP_2$) within the specified duration of using the active $BWP_2$, then the UE continues to operate on the active $BWP_2$ and restarts timing of the specified duration of using the active $BWP_2$.

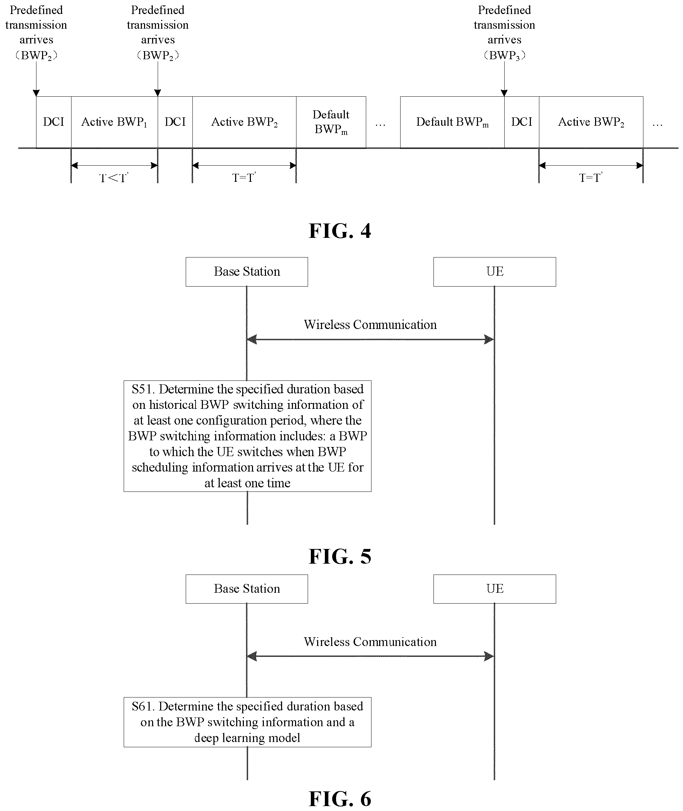

Exemplarily, the timing information may be used for the UE to switch to the third BWP when there is scheduling information of the third BWP within the specified duration of using the first BWP, and to re-determine timing of the specified duration. For example, as shown in FIG. 4, the UE has scheduling information of $BWP_2$ within the specified duration of using the active BWP ($BWP_1$), then UE switches to the active $BWP_2$ and restarts timing of the specified duration of using the active $BWP_2$.

The timing information may be used for the UE to switch to a scheduled BWP indicated by BWP scheduling information when the BWP scheduling information occurs upon using the second BWP, and start timing of the specified duration. For example, as shown in FIG. 4, if the UE is using the default BWP ($BWP_m$) and receives scheduling information of an active $BWP_3$, then the UE switches to the active $BWP_3$ and starts timing of the specified duration of using the active $BWP_3$.

In this way, according to some embodiments of this disclosure, the base station may send timing indication information to the UE, where the timing indication information indicates configuration of timing information, and the timing information is used for the UE to determine a related operation of BWP switching according to the specified duration indicated by the timing information. Therefore, the base station can flexibly configure the specified duration of operations related to BWP switching for the UE (for example, configuring the duration of using an active BWP by the UE), so that the UE can flexibly adjust the specified duration of operations related to BWP switching. For example, adaptive BWP switching can be implemented according to traffic patterns. Accordingly, the delay caused by untimely BWP switching, or the high power consumption caused by always operating in a relatively large bandwidth can be reduced.

In some embodiments of this disclosure, the timing information may be used for the UE to switch to the second BWP when there is no predefined transmission within the specified duration of using the first BWP, where the bandwidth of the second BWP is smaller than the bandwidth of the first BWP. In this way, the UE can switch to the second BWP with a relatively small bandwidth when there is no predefined transmission within the specified duration of using the first BWP with a relatively large bandwidth. Compared with the UE always operating on the first BWP with the relatively large bandwidth, the power consumption of the UE can be reduced to realize energy saving for the UE.

Moreover, in some embodiments of this disclosure, the timing information may also be used for the UE to adopt a scheduled BWP indicated by BWP scheduling information when the BWP scheduling information occurs within the specified duration of using the first BWP. For example, the UE continues to operate on the first BWP when there is scheduling information of the first BWP, or switches to the second BWP when there is scheduling information of the second BWP. In this way, BWP adaptive switching according to traffic patterns and the like can be further realized.

Moreover, in some embodiments of this disclosure, the timing information can also be used for the UE to switch to a scheduled BWP (i.e., switch to an active BWP) indicated by BWP scheduling information when the BWP scheduling information occurs upon using the second BWP, that is, the default BWP. In this way, according to some embodiments of this disclosure, the default BWP can be switched to the active BWP in time for service transmission and the like, thereby reducing the time delay of service transmission and the like.

In this way, according to some embodiments of this disclosure, the delay can be reduced while the power consumption of the UE is reduced, and BWP adaptive switching can also be effectively achieved according to traffic patterns.

In some embodiments, the timing information is used for the UE to switch to the second BWP when there is no predefined transmission within the specified duration of using the first BWP in one configuration period.

Some embodiments of this disclosure provide a BWP switching method, which is performed by a base station and includes: sending timing indication information, where the timing indication information indicates configuration of timing information, and the timing information is used for UE to determine, within one configuration period, a related operation of BWP switching according to a specified duration indicated by the timing information.

Exemplarily, the timing information is used for the UE to switch to the second BWP when there is no predefined transmission within the specified duration of using the first BWP in one configuration period. Alternatively, the timing information is used for the UE to use the first BWP indicated by a predefined transmission or switch to a third BWP of a same type as the first BWP when the predefined transmission occurs within the specified duration of using the first BWP in one configuration period, and re-determine timing of the specified duration, where a bandwidth of the third BWP is greater than the bandwidth of the second BWP.

The configuration period can be determined by the base station.

For example, the base station determines to send N times of BWP scheduling information to the UE, and the difference between the time point of sending the BWP scheduling information for the first time and the time point of sending the BWP scheduling information for the N-th time is one configuration period, where N is an integer greater than or equal to 1. Here, once the base station sends BWP scheduling information to the UE, there may be one service arrives at the UE, which may be regarded as one predefined transmission. In other words, one configuration period refers to that the BWP scheduling information arrives at the UE every N times.

In another example, the base station determines that N predefined transmissions arrive at the UE, and the difference between the time point of the predefined transmission arriving at the UE for the first time and the time point of the predefined transmission arriving at the UE for the N-th time is one configuration period, where N is an integer greater than or equal to 1. In other words, one configuration period refers to that the predefined transmission arrives at the UE every N times.

For another example, the base station may determine a predefined time interval as one configuration period.

In this way, according to some embodiments of this disclosure, one piece of timing information can be sent for each configuration period to indicate a specified duration of a scheduled BWP within the configuration period. Therefore, on the one hand, it is possible to flexibly adjust the specified duration for the UE to switch to an active BWP within one configuration period; one the other hand, the timing indication information can be sent only once for BWP switching within one configuration period, thereby further saving power consumption of the UE.

In the step S21, said sending the timing indication information includes one of the following:

sending DCI carrying the timing indication information;

sending RRC signaling carrying the timing indication information.

Some embodiments of this disclosure provide a BWP switching method, which is performed by a base station and may include: sending DCI carrying the timing indication information, or sending RRC signaling carrying the timing indication information.

In some embodiments, the DCI may further include BWP scheduling information. For example, the base station sends DCI to the UE, where a first predefined bit of the DCI carries the BWP scheduling information and a second predefined bit of the DCI carries the timing indication information, the BWP scheduling information indicates a scheduled BWP, and the timing indication information indicates a configured timing information. Here, the timing information may include a specified duration.

Each of the first predefined bit and the second predefined bit may be one or more bits. Each of the first predefined bit and the second predefined bit may be a certain predefined field in the DCI. For example, the first predefined bit may be a BWP indicator field of the DCI, and the second predefined bit may be a timer indicator field of the DCI.

In some other embodiments, the timing indication information may be carried by a first DCI, and the BWP scheduling information may be carried by at least one second DCI. For example, the base station sends the first DCI to the UE, where the first DCI carries the timing indication information; and the base station sends one or more second DCIs to the UE, where one of the second DCIs carries the BWP scheduling information, and the BWP scheduling information indicates a scheduled BWP.

Here, the DCI can be any format of DCI. For example, it can be DCI 0, DCI 1, DCI 2, DCI 1_1, DCI x, or the like.

Here, the predefined bit that carries the timing indication information in the DCI may be any predefined bit in the DCI, or may be a reserved bit, or may be a predefined bit after the predefined bit that carries the BWP scheduling information.

Here, if the specified duration is a specified duration for a scheduled BWP within one configuration period, configuration of the specified duration for the scheduled BWP within the configuration period can be implemented in at least one of the following manners.

In manner 1, the base station may send a DCI before the start time point of the configuration period, where the DCI carries the timing indication information.

In manner 2, the base station may carry and send the timing indication information in a DCI carrying scheduling information of the first one of BWPs within the configuration period. For example, the base station sends a first DCI, where the first DCI carries scheduling information of a first DCI and the timing indication information, and the scheduling information of the first DCI indicates the first one of BWPs scheduled within the configuration period.

In manner 3, the base station may carry and send the timing indication information in a DCI carrying scheduling information of the first one of BWPs within the configuration period and a DCI carrying scheduling information of at least one another BWP within the configuration period. For example, the base station sends a first DCI and at least one second DCI, where the first DCI carries scheduling information of a first BWP and the timing indication information of the first BWP, and the scheduling information of the first BWP indicates the first one of BWPs scheduled within the configuration period; the second DCI carries scheduling information of a second BWP and the timing indication information, and the scheduling information of the second BWP indicates a BWP(s) other than the first one of BWPs scheduled within the configuration period.

In manner 4, the base station may carry and send the timing indication information in DCIs carrying scheduling information of each BWP within the configuration period. For example, the base station sends N DCIs in one configuration period, where each DCI carries scheduling information of one BWP and the timing indication information, and N is the number of times the BWP scheduling information arrives at the UE in one configuration period.

In some embodiments of this disclosure, the timing indication information can be sent through DCI. Accordingly, based one DCI, the original function of sending the DCI by the base station can be realized (e.g., BWP scheduling can be realized), and the function of sending the timing indication information in the DCI can also be realized. In other words, two functions can be realized through one DCI. In this way, the utilization rate of the DCI is improved and the signaling overhead is reduced, that is, the power consumption of the base station and the UE can be reduced. For the configuration of specified duration of BWP in one configuration period, the configuration of the specified duration of the BWP in the entire configuration period can also be realized through one DCI, thereby further reducing the power consumption of the base station and the UE, and realizing energy saving.

In some embodiments of this disclosure, if the timing indication information is sent through RRC signaling, two functions can also be realized through one RRC signaling, so as to improve the utilization rate of RRC signaling and reduce signaling overhead, that is, reduce power consumption of the base station and the UE.

It should be noted that those skilled in the art can understand that the methods provided in some embodiments of this disclosure may be performed independently, or together with some methods in some other embodiments of this disclosure or some methods in related art.

As shown in FIG. 5, some embodiments of this disclosure provide a BWP switching method, which is performed by a base station and may include followings.

In step S51, the specified duration is determined based on BWP switching information of at least one historical configuration period, where the BWP switching information includes the BWP to which the UE switches when the BWP scheduling information arrives at the UE at least once.

In some embodiments of this disclosure, the specified duration is the specified duration in step S21, and the configuration period is the configuration period in the forgoing embodiments.

For example, the specified duration may be a specified duration of using one or more BWPs by the UE, or may also be a specified duration of using a BWP by the UE within one configuration period or multiple configuration periods. Here, the BWP used by the UE may refer to the first BWP and/or the third BWP, or other BWPs of the same type as the first BWP and/or the third BWP.

In this step S51, said determining the specified duration based on the BWP switching information of at least one historical configuration period includes:

determining the specified duration based on the BWP switching information of a previous configuration period;
determining the specified duration based on the BWP switching information of a configuration period before the previous one;
determining the specified duration based on the BWP switching information of a predefined number of configuration periods adjacent to the current configuration period, where the predefined number is a number greater than or equal to 1.

Some embodiments of this disclosure provide a BWP switching method, which is performed by a base station and may include: determining the specified duration based on the BWP switching information of the previous configuration period; or determining the specified duration based on the BWP switching information of the predefined number of configuration periods adjacent to the current configuration period, where the predefined number is a number greater than or equal to 1.

The BWP switching information includes the BWP to which the UE switches when the BWP scheduling information arrives at the UE for N times within one configuration period.

For example, within one configuration period, if the BWPs that the UE switches to, when the BWP scheduling information arrives at the UE for the first to N-th time sequentially, in turn are: $BWP_1$, $BWP_2$, ..., and $BWP_N$, then the BWP switching information in this configuration period can be marked as

$$s = \{BWP_1^1 \quad BWP_2^2 \quad ... \quad BWP_N^N\}$$

. Here, $BWP_N^N$ indicates that, when the BWP scheduling information arrives at the UE for the N-th time, the BWP to which the UE switches is $BWP_N$.

For another example, if the base station configures m BWPs for the UE; the m BWPs can be marked as: $BWP_1$, $BWP_2$, ..., and $BWP_m$, then the BWP switching information in the k-th configuration period can be marked as:

$$s^k = \{BWP_i^1 \quad BWP_i^2 \quad ... \quad BWP_i^N\}$$

, where i $\in \{1, 2, ..., m\}$. Here, $BWP_i^N$ indicates that, when the BWP scheduling information arrives at the UE for the N-th time, the BWP to which the UE switches is $BWP_i$, where k is an integer greater than 0. If k is 1, the BWP switching information in the first configuration period is

$$s^1 = \{BWP_i^1 \quad BWP_i^2 \quad ... \quad BWP_i^N\}$$
.

The step S51 may include: determining the specified duration of the next configuration period based on the specified duration of a historical configuration period. The step S51 may include: determining the specified duration of the next configuration period based on an average value of the specified durations of multiple historical configuration periods.

The step S51 may include: determining the specified duration of the next configuration period based on the specified durations of multiple historical configuration periods and weight coefficients corresponding to the specified durations of respective configuration periods. The weight coefficient corresponding to a historical configuration period closer to the current configuration period is greater, and the sum of the weight coefficients corresponding to respective configuration periods is equal to 1.

In the forgoing example, said determining the specified duration of the next configuration period may also include: determining the specified duration of using one or more BWPs by the UE, or the specified duration of using a BWP by the UE in one configuration period or multiple configuration periods.

Step S51 may include: determining the specified duration based on the BWP switching information and a deep learning model. Said determining the specified duration may include: determining the specified duration of using one or more BWPs by the UE, or determining the specified duration of using a BWP by the UE in one configuration period or multiple configuration periods, or determining the specified duration of using a BWP by the UE in the next configuration period.

In this way, in some embodiments of this disclosure, the BWP switching information in at least one historical configuration period can be used, that is, situation of active BWP(s) used by the UE in a historical period, can be used for determining the specified duration. In this way, the specified duration of BWP to be used by the UE can be accurately estimated, thereby facilitating the UE to update the specified duration of using the BWP, and enabling the BWP to be switched adaptively to traffic patterns and the like.

As shown in FIG. 6, some embodiments of this disclosure provide a BWP switching method, which is performed by a base station and may include followings.

In step S61, the specified duration is determined based on the BWP switching information and the deep learning model.

In some embodiments of this disclosure, the BWP switching information is the BWP switching information in step S51, and the specified duration is the specified duration in step S21 or step S51.

The step S61 may include: determining, based on the BWP switching information and the deep learning model, the specified duration of using at least one BWP by the UE, or the specified duration for using a BWP within at least one configuration period.

The deep learning model may be any available deep learning model. For example, it may be a reinforcement learning model. The reinforcement learning model can also be any available reinforcement learning model; for example, it may be an action-evaluation algorithm model.

The action-evaluation algorithm model may include: an action network and an evaluation network. The action network can be used to determine a predefined duration; the evaluation network can be used to determine an evaluation index of the predefined duration; and the action network can be used to determine the specified duration based on the evaluation index of the predefined duration.

For example, this step S61 may include:

determining a predefined duration based on the BWP switching information and a selection strategy; determining an evaluation index for the predefined duration based on the BWP switching information, the predefined duration, and an evaluation network of the deep learning model; and determining the specified duration based on the BWP switching information, the predefined duration, the evaluation index, and an action network of the deep learning model.

Some embodiments of this disclosure provide a BWP switching method, which is performed by a base station and may include following steps.

In step S61a, a predefined duration is determined based on the BWP switching information and a selection strategy.

In step S61b, an evaluation index for the predefined duration is determined based on the BWP switching information, the predefined duration, and an evaluation network of the deep learning model.

In step S61c, the specified duration is determined based on the BWP switching information, the predefined duration, the evaluation index, and an action network of the deep learning model.

This step S61a may include calculating the predefined duration based on the BWP switching information and the selection strategy. For example, if the selection strategy is: $\pi_\theta(a^k, s^k)$. The selection strategy for the k-th configuration period can be: $\pi^k(a^k|s^k) =$

$$\frac{1}{\sqrt{2\pi}\sigma(s^k)} exp\left(-\frac{\left(a^k-\mu(s^k)\right)^2}{2\sigma^2(s^k)}\right)$$ , where

$$s^k = \{BWP_i^1 \quad BWP_i^2 \quad ... \quad BWP_i^N\}$$ . Then, based on the selection strategy, the predefined duration can be determined as: $T_{interval} = \mu(s^k)$.

Step S61a may also include obtaining the predefined duration by inputting the BWP switching information into the action network, where the action network is an action network configured with the selection strategy.

Some embodiments of this disclosure provide a BWP switching method, which is performed by a base station and may include: determining the predefined duration based on the BWP switching information and the selection strategy.

Step S61b may include:

    determining a reward index based on a ratio of a duration of a second BWP to a predefined duration in a historical configuration period;
    obtaining an evaluation index for the predefined duration by inputting the BWP switching information and the reward index into the evaluation network.

The duration of the second BWP in one configuration period refers to: a duration during which the UE switches to the second BWP in one configuration period. The second BWP refers to a default BWP.

Some embodiments of this disclosure provide a BWP switching method, which is performed by a base station and may include following steps.

In step S61b1, the reward index is determined based on the ratio of the duration of the second BWP to the predefined duration in a historical configuration period.

In step S61b2, the evaluation index for the predefined duration is obtained by inputting the BWP switching information and the reward index into the evaluation network.

The step S61b1 may include: determining the reward index for the k-th configuration period based on the ratio of the duration of the second BWP to the predefined duration in the k-th configuration period.

Exemplarily, the duration $T_{default}$ of the second BWP and the predefined duration $T_{interval}$ in the k-th configuration period are obtained; an energy-saving time proportion is calculated based on the ratio of $T_{default}$ to $T_{interval}$ as $\alpha = \frac{T_{default}}{T_{interval}}$; and the reward index $R^\pi(s^k,$ $a^k)$ is determined based on the energy-saving time proportion. The reward index for the k-th configuration period may be: $R^k(s^k, a^k)$.

This step S161b2 may include: inputting the BWP switching information and the reward index into an input layer of the evaluation network, and inputting an output result of the input layer into a M-layer hidden layer of the evaluation network; and inputting an output result of the hidden layer of the evaluation network into an output layer of the evaluation network to obtain the evaluation index for the predefined duration, where M is an integer greater than 0.

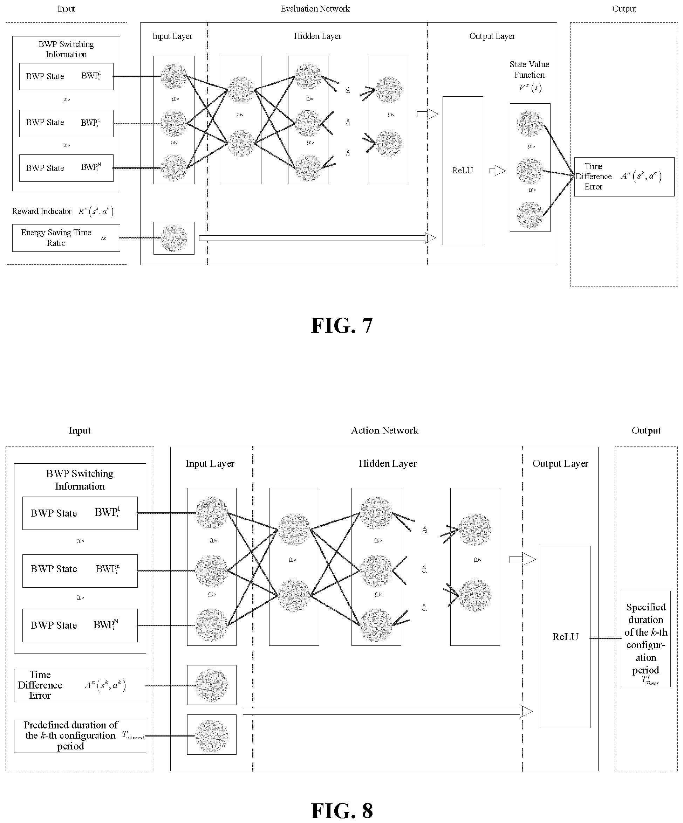

Exemplarily, as shown in FIG. 7, the evaluation network includes an input layer, M hidden layers and an output layer. The reward index corresponding to the k-th configuration period is taken as an example. The input layer can be marked as $\phi_i'$. The input layer is composed of N+1 neural networks, and its input includes state and reward, where the state can be the BWP switching information of the k-th configuration period: $s^k = \{BWP_i^1 \quad BWP_i^2 \quad ... \quad BWP_i^N\}$, and the reward is the reward index $R^k(s^k, a^k)$. Each element of the input layer is connected one-to-one with a separate neuron, that is, N neurons are used to transmit N elements in the state set $s^k$, and one neuron is used to transmit $R^k(s^k, a^k)$. The hidden layer has M layers, which can be marked as $\phi_1', \phi_2'$, ..., and $\phi_M'$, and the M hidden layers are used to evaluate the mapping relationship between the input and output of the network. In some embodiments, the first hidden layer $\phi_1'$ is used to mix the state, that is, to mix the BWP switching information of the k-th configuration period. The output of the l-th neuron of the first hidden layer $\phi_1'$ is: $y_{1,l}' = \sum_{j=1}^N \omega_{1,l,j}' x_j' + b_{1,l}'$, where $\omega_{1,l,j}'$ is the weight of the connection between the input layer $\phi_i'$ and the l-th neuron of the first hidden layer $\phi_1', x_j'$ is the output of the j-th neuron in the input layer $\phi_i', b_{1,l}'$ is the bias of the l-th neuron of the first hidden layer $\phi_1'$. The second hidden layer $\phi_2'$ is similar to the first hidden layer $\phi_1'$, but the second hidden layer is used to mix state and reward. The remaining hidden layers, such as the 3rd to M-th hidden layers $\phi_3'$, ..., and $\phi_M'$ approximately mix the relationship between input and output in the form of full connection, that is, the output of the (i-1)-th hidden layer is the input of the i-th hidden layer, where i is an integer greater than 3 and less than or equal to M. The output layer can be marked as $\phi'_o$. The output layer uses a linear rectification unit (ReLU) as an activation function to output the evaluation index for the predefined duration. For example, the evaluation index $V^\pi(s)$ can be obtained based on a state value function:

$$V^\pi(s) = En\{\sum_{k=0}^{\infty} \gamma^k R^k(s^k, a^k)|s^o, \pi(s^k)\}$$

, where $\gamma^k$ is a discount factor, $R^k(s^k, a^k)$ is the reward index, $s^o$ is a given initial state, and $\pi(s^k)$ is a selection strategy of the action network under the state set $s^k$. Here, $V^k(s)$ is the evaluation index of the predefined duration corresponding to the k-th configuration period.

The step S161b2 may include determining the evaluation index of the predefined duration based on the evaluation index of the predefined duration corresponding to the k-th configuration period, the evaluation index and the reward index corresponding to the (k+1)-th configuration period. The determined evaluation index of the predefined duration may be regarded as the evaluation index of the (k+1)-th configuration period.

Exemplarily, based on the forgoing embodiment of FIG. 7, the evaluation index for the predefined duration is obtained as: $A^\pi(s^k, a^k) = R^\pi(s^k, a^k) + \gamma V^\pi(s^{k+1}) - V^\pi(s^k)$, where $R^\pi(s^k, a^k)$ is the reward index, $\gamma$ is the discount factor, $V\pi(s^{k+1})$ is the evaluation index corresponding to the (k+1)-th configuration period, and $V^\pi(s^k)$ is the evaluation index corresponding to the k-th configuration period. Here, the $A^\pi(s^k, a^k)$ can also be regarded as a time difference error.

Step S61c may include: inputting the BWP switching information, the predefined duration, and the evaluation index into the input layer of the action network, inputting an output result of the input layer into the M-layer hidden layer of the action network; and inputting an output result of the hidden layer of the action network to an output layer of the action network to obtain the specified duration, where M is an integer greater than 0.

Exemplarily, as shown in FIG. 8, the action network includes an input layer, M hidden layers and an output layer. The input layer can be marked as $\phi'_i$. The input layer is composed of N+2 neural networks, and its input includes state, action and time difference error, where the state can be the BWP switching information of the k-th configuration period:

$$s^k = \{BWP_i^1 \quad BWP_i^2 \quad ... \quad BWP_i^N\}$$

, the action is the predefined duration $T_{interval}$ of the k-th configuration period, and the time difference error can be the evaluation index $A^\pi(s^k, a^k)$ of the predefined duration corresponding to the k-th configuration period. Each element of the input layer is connected one-to-one with a separate neuron, that is, N neurons are used to transmit N elements in the state set $s^k$, one neuron is used to

transmit $T_{interval}$ and one neuron is used to transmit $A^\pi(s^k, a^k)$. The hidden layer has M layers, which can be marked as $\phi'_1$, $\phi'_2$, ..., and $\phi'_M$, and the M hidden layers are used to evaluate the mapping relationship between the input and output of the network. In some embodiments, the first hidden layer $\phi'_1$ is used to mix the state, that is, to mix the BWP switching information of the k-th configuration period. The output of the l-th neuron of the first hidden layer $\phi'_1$ is:

$$y'_{1,l} = \sum_{j=1}^{N} \omega'_{1,l,j} x'_j + b'_{1,l}$$

, where $\omega'_{1,l,j}$ is the weight of the connection between the input layer $\phi'_i$ and the l-th neuron of the first hidden layer $\phi'_1$, $x'_j$ is the output of the j-th neuron in the input layer $\phi'_i$, and $b'_{1,l}$ is the bias of the l-th neuron of the first hidden layer $\phi'_1$. The second hidden layer $\phi'_2$ is similar to the first hidden layer $\phi'_1$, but the second hidden layer is used to mix state, action and time difference error. The remaining hidden layers, such as the 3rd to M-th hidden layers $\phi'_3$, ..., and $\phi'_M$ approximately mix the relationship between input and output in the form of full connection, that is, the output of the (i-1)-th hidden layer is the input of the i-th hidden layer, where i is an integer greater than 3 and less than or equal to M. The output layer can be marked as $\phi'_o$. The output layer uses a linear rectification unit (ReLU) as an activation function to output the specified duration. For example, the specified duration $T'_{Timer}$ can be obtained based on

$$T'_{Timer} = \mu(s^{k+1}) = (\theta^{k+1})^T \varphi(s^{k+1})$$

, where $\theta^{k+1} \leftarrow \theta^k + \eta\nabla_\theta \log \pi_\theta(s^k, a^k)A^\pi(s^k, a^k)$ is a strategy parameter vector, and $\phi(s^{k+1}) = \frac{\sigma^2(s^{k+1})}{a^{k+1}-\mu(s^{k+1})} \nabla_\theta \log \pi (a^{k+1}|s^{k+1})$ is a policy feature vector. The specified duration $T'_{Timer}$ may be the specified duration of the (k+1)-th configuration period.

In some embodiments, the specified duration can be obtained through performing steps S61a, S61b and S61c once.

In some other embodiments, step S61a can be performed once, and steps S61b and S61c can be repeated multiple times to obtain the specified duration. Here, repeating the operations of steps S61b and S61c multiple times may include: obtaining the (p-1)-th specified duration by inputting the BWP switching information, the predefined duration, and the evaluation index determined in the (p-1)-th operation of S61b into the action network in the (p-1)-th operation of step S61c; and the (p-1)-th specified duration, serving as the p-th predefined duration, is input into the evaluation network in the p-th operation of S61b along with the BWP switching information, so as to obtain the p-th evaluation index. The forging cycle is repeated until multiple (e.g., P) cycles end. Here, p is an integer greater than 1 and less than or equal to P, and P is an integer greater than 1. Here, the number P of cycles can be determined by the base station.

In some embodiments, the forging action network may be an action network trained based on a neural network, and the forging evaluation network may be an evaluation network trained based on a neural network.

In some embodiments of this disclosure, reinforcement learning can be performed on the BWP switching information of at least one configuration period, such as the BWP switching information of the previous configuration period, so as to determine the specified duration of using the BWP by the UE in the current configuration period (or the next configuration period). In this way, it is possible to continuously adjust the specified duration of using the BWP by the UE based on the traffic pattern, and obtain an accurate specified duration of using the BWP that adapts to the change of the traffic pattern, thereby realizing a more energy-saving and accurate BWP switching.

It should be noted, those skilled in the art can understand that the methods provided in some embodiments of this disclosure can be executed independently, or together with some methods in other embodiments of this disclosure or some methods in related art.

The following BWP switching method is performed by the UE, which is similar to the description of the forgoing BWP switching method performed by the base station. For the technical details not disclosed in the embodiments of the BWP switching method performed by the UE, the description of examples of the BWP switching method performed by the base station can be referred to and will not be described in detail here.

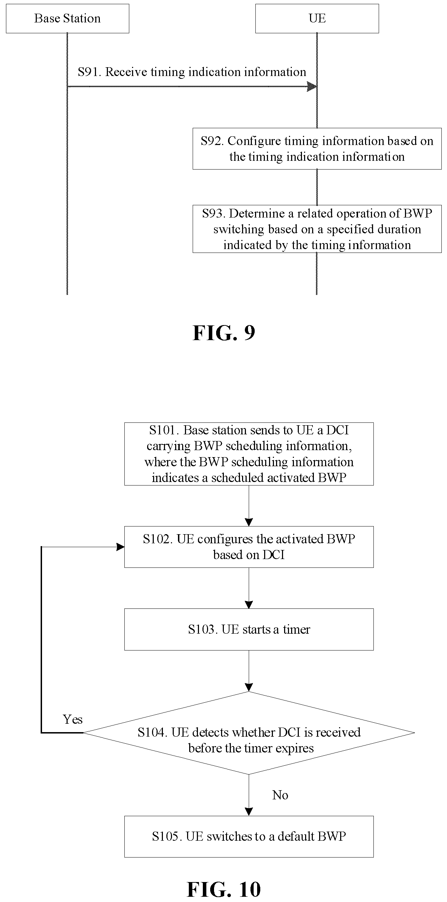

As shown in FIG. 9, some embodiments of this disclosure provide a BWP switching method, which is performed by the UE and includes following steps.

In step S91, timing indication information is received.

In step S92, timing information is configured based on the timing indication information.

In step S93, a related operation of BWP switching is determined based on a specified duration indicated by the timing information.

In some embodiments of this disclosure, the timing indication information is the timing indication information in step S21; the timing information is the timing information in step S21; and the first BWP, the second BWP, the predefined transmission and the specified duration are respectively the first BWP, the second BWP, the predefined transmission and the specified duration in the forgoing embodiments.

This step S93 may include:

based on the timing information, switching to a second BWP when determining no predefined transmission occurs within the specified duration of using a first BWP, where a bandwidth of the second BWP is smaller than a bandwidth of the first BWP;
based on the timing information, when determining the predefined transmission occurs within the specified duration of using the first BWP, using the first BWP indicated by the predefined transmission or a third BWP of a same type as the first BWP, and re-determining timing of the specified duration, where a bandwidth of the third BWP is greater than the bandwidth of the second BWP.

Some embodiments of this disclosure provide a BWP switching method, which is performed by a UE and may include:

based on the timing information, switching to a second BWP when determining no predefined transmission occurs within the specified duration of using a first BWP, where a bandwidth of the second BWP is smaller than a bandwidth of the first BWP;
based on the timing information, when determining the predefined transmission occurs within the specified duration of using the first BWP, using the first BWP indicated by the predefined transmission or a third BWP of a same type as the first BWP, and re-determining timing of the specified duration, where a bandwidth of the third BWP is greater than the bandwidth of the second BWP.

The predefined transmission includes at least one of the following:

BWP scheduling information;
service transmission of the first BWP.

The BWP scheduling information includes at least one of the following:

scheduling information of the first BWP;
scheduling information of the third BWP, where the third BWP and the first BWP belong to the same type of BWPs, and have a larger bandwidth than the second BWP.

Some embodiments of this disclosure provide a BWP switching method, which is performed by the UE and may include: based on the timing information, when determining there is BWP scheduling information within the specified duration of using the first BWP, switching to the scheduled BWP indicated by the BWP scheduling information, and redetermining the timing for the specified duration.

Exemplarily, based on the timing information, the UE determines that there is scheduling information of the first BWP within the specified duration of using the first BWP; then the UE continues to operate on the first BWP scheduled according to the scheduling information of the first BWP, and re-determines the timing for the specified duration of using the first BWP.

Exemplarily, based on the timing information, the UE determines that there is scheduling information of the third BWP within the specified duration of using the first BWP; then the UE switches to the third BWP scheduled according to the scheduling information of the third BWP, and re-determines the timing for the specified duration of using the third BWP.

Exemplarily, based on the timing information, the UE determines that there is service transmission of the first BWP within the specified duration using the first BWP; then the UE continues to operate on the first BWP.

Some embodiments of this disclosure provide a BWP switching method, which is performed by the UE and may include: based on the timing information, upon determining that there is BWP scheduling information when using the second BWP, switching to the scheduled BWP indicated by the BWP scheduling information, and starting timing for the specified duration; or based on the timing information, continuing operating on the second BWP if there is no predefined transmission when using the second BWP.

In this step S91, said receiving the timing indication information includes one of the following:

  receiving DCI carrying the timing indication information;
  receiving RRC signaling carrying the timing indication information.

Some embodiments of this disclosure provide a BWP switching method performed by a UE, which may include: receiving DCI carrying the timing indication information, or receiving RRC signaling carrying the timing indication information.

For the above implementation manner, reference may be made to the description of the base station side for details, which are not repeated here.

It should be noted, those skilled in the art can understand that the methods provided in some embodiments of this disclosure can be executed independently, or together with some methods in other embodiments of this disclosure or some methods in related art.

In order to further explain any embodiment of this disclosure, several specific examples are provided below.

Example I

As shown in FIG. 10, some embodiments of this disclosure provide a BWP switching method, which is performed by communication devices including a base station and a UE. The method may include the following steps.

Here, the base station can configure m-1 active BWPs and a default BWP for the UE. The identity information (BWP ID) of the m-1 BWPs may be 1, 2, ..., and m-1 respectively, and the identity information of the default BWP is m, where m is an integer greater than 1. The active BWP(s) may include the first BWP and/or the third BWP in the forgoing embodiments, and the default BWP may include the second BWP in the forgoing embodiments.

In step S101, the base station sends DCI carrying BWP scheduling information to the UE, where the BWP scheduling information indicates an active BWP to be scheduled.

In an optional embodiment, if the base station receives notification information from a core network device indicating that a predefined transmission arrives at the UE, it sends DCI to the UE through physical downlink control channel (PDCCH), where the DCI carries the BWP scheduling information. For example, the base station sends DCI 1_1, where the BWP indication field of DCI 1_1 carries BWP scheduling information, and the BWP scheduling information indicates an active BWP to be scheduled.

In step S102, UE configures the active BWP based on the DCI.

In an optional embodiment, if the UE receives the DCI carrying the BWP scheduling information which indicates an active BWP to be scheduled based on the BWP scheduling information, the active BWP to be used by the UE is configured.

In step S103, UE starts a timer.

In an optional embodiment, the UE starts a timer and starts counting from zero. Here, if the timer is to be restarted, the timer is reset to zero and starts counting.

In an optional embodiment, the timing duration of the timer is the specified duration of using the active BWP.

In step S104, UE detects whether DCI is received before the timer expires; if yes, step S102 is performed; and if not, step S105 is performed.

In an optional embodiment, the UE detects whether DCI, which carries BWP scheduling information indicating an active BWP to be scheduled, is received before the timer expires; if yes, step S102 is performed; and if not, step S105 is performed.

In step S105, UE switches to the default BWP.

In an optional embodiment, the UE switches to the default BWP after the timer expires.

Example II

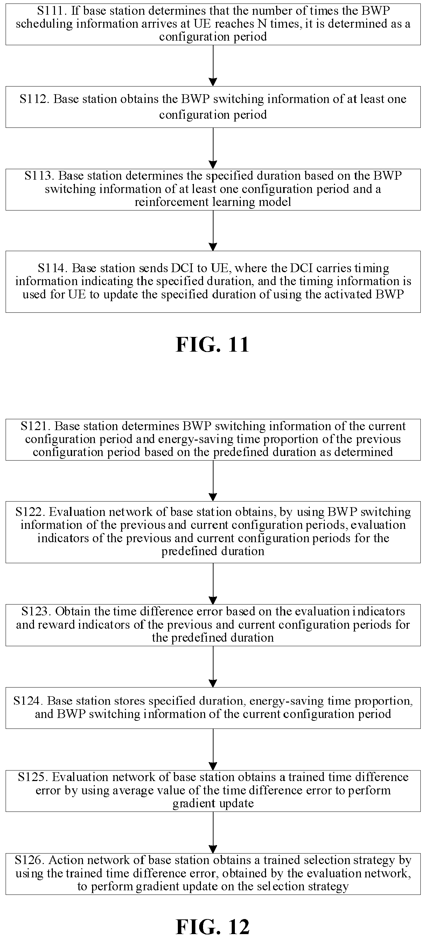

As shown in FIG. 11, some embodiments of this disclosure provide a BWP switching method, which is performed by communication devices including a base station and a UE. The method may include the following steps.

In step S111, when the base station determines that the number of times the BWP scheduling information arrives at the UE reaches N, one configuration period is determined.

In an optional embodiment, the base station starts a timer and counts from zero, and every N times when the BWP scheduling information arrives at the UE, it is determined as one configuration period, where N is an integer greater than 0.

Here, once the base station sends the BWP scheduling information to the UE, it is considered as that a service arrives at the UE once.

In step S112, the base station obtains BWP switching information of at least one configuration period.

In an optional embodiment, the base station obtains the BWP switching information of the previous configuration period from historical information. For example, the previous configuration period is the k-th configuration period, and the base station obtains the BWP switching information of the k-th configuration period as:

$$s^k = \{\mathrm{BWP}_i^1 \quad \mathrm{BWP}_i^2 \quad ... \quad \mathrm{BWP}_i^N\}$$, where $i \in$ {1, 2, ..., m}.

In step S113, the base station determines the specified duration based on the BWP switching information of at least one configuration period and a reinforcement learning model.

Here, the reinforcement learning model includes an action network and an evaluation network.

In an optional embodiment, the step S113 includes following steps.

In step S113a, the base station determines a predefined duration based on a selection strategy, where the selection strategy is a selection strategy for BWP switching information. For example, the selection strategy for the k-th configuration period is

$$\pi^k(a^k|s^k) = \frac{1}{\sqrt{2\pi}\sigma(s^k)} exp\left(-\frac{(a^k-\mu(s^k))^2}{2\sigma^2(s^k)}\right)$$

. Then, based on the selection strategy, the predefined duration of the k-th configuration period is determined as: $T_{interval} = \mu(s^k)$.

In step S113b, the base station evaluates the predefined duration based on an evaluation network to obtain an evaluation index. For example, the evaluation index for the updated (k+1)-th configuration period is obtained as $A^\pi(s^k, a^k) = R^\pi(s^k, a^k) + \gamma V^\pi(s^{k+1}) - V^\pi(s^k)$, where $R^\pi(s^k, a^k)$ is the reward index, $\gamma$ is the discount factor, $V^\pi(s^{k+1})$ is the evaluation index corresponding to the (k+1)-th configuration period, and $V^\pi(s^k)$ is the evaluation index corresponding to the k-th configuration period.

In step S113c, the base station updates the predefined duration based on the evaluation index and an action network to obtain the specified duration. For example, the base station inputs the evaluation index obtained in step S113b into the action network, thereby obtaining the specified duration based on

$$T'_{Timer} = \mu(s^{k+1}) = (\theta^{k+1})^T \varphi(s^{k+1})$$

. The specified duration may be used as the specified duration of using the BWP by the UE in the (k+2)-th configuration period.

In step S114, the base station sends DCI to the UE, where the DCI carries timing information indicating the specified duration, and the timing information is used for the UE to update the specified duration of using the active BWP.

In an optional embodiment, the base station sends DCI 1_1 to the UE, where the BWP indication field of DCI 1_1 carries the BWP scheduling information and the timer indication field of DCI 1_1 carries the timing indication information. Here, the BWP scheduling information indicates the active BWP to be scheduled, and the timing indication information carries timing information indicating the specified duration. Upon receiving DCI 1_1, the UE switches to the active BWP indicated by the BWP scheduling information based on the BWP scheduling information carried in the BWP indication field of DCI 1_1, and updates the specified duration of using the active BWP based on the timer indication information carried in the timer indication field of DCI 1_1 and the specified duration carried in the timer indication information.

In some embodiments, a method for determining the specified duration based on an action network is provided, which can be implemented based on the action network as shown in FIG. 8. The action network includes an input layer, M hidden layers, and an output layer, and the method includes followings.

Input layer: the input layer can be marked as $\phi'_i$. The input layer is composed of N+2 neural networks, and its input includes state, action and time difference error, where the state can be the BWP switching information of the k-th configuration period: $s^k = \{\mathrm{BWP}_i^1 \quad \mathrm{BWP}_i^2 \quad ... \quad \mathrm{BWP}_i^N\}$, the action is the predefined duration $T_{interval}$ of the k-th configuration period, and the time difference error can be the evaluation index $A^\pi(s^k, a^k)$ of the predefined duration corresponding to the k-th configuration period. Each element of the input layer is connected one-to-one with a separate neuron, that is, N neurons are used to transmit N elements in the state set $s^k$, one neuron is used to transmit $T_{interval}$ and one neuron is used to transmit $A^\pi(s^k, a^k)$.

Hidden layer: there are M hidden layers in total, which can be marked as $\phi'_1$, $\phi'_2$, ..., and $\phi'_M$. The M hidden layers are used to evaluate the mapping relationship between the input and output of the network.

In some embodiments, the first hidden layer

$\phi'_1$ is used to mix the state, that is, to mix the BWP switching information of the k-th configuration period. The output of the l-th neuron of the first hidden layer $\phi'_1$ is: $y'_{1,l} = \sum_{j=1}^{N} \omega'_{1,l,j} x'_j + b'_{1,l}$, where $\omega'_{1,l,j}$ is the weight of the connection between the input layer $\phi'_i$ and the l-th neuron of the first hidden layer $\phi'_1$, $x'_j$ is the output of the j-th neuron in the input layer $\phi'_i$, and $b'_{1,l}$ is the bias of the l-th neuron of the first hidden layer $\phi'_1$.

The second hidden layer $\phi'_2$ is similar to the first hidden layer $\phi'_1$, but the second hidden layer is used to mix state, action and time difference error. The remaining hidden layers, such as the 3rd to M-th hidden layers $\phi'_3$, ..., and $\phi'_M$ approximately mix the relationship between input and output in the form of full connection, that is, the output of the (i-1)-th hidden layer is the input of the i-th hidden layer, where i is an integer greater than 3 and less than or equal to M.

Output layer: the output layer can be marked as $\phi'_o$. The output layer uses a linear rectification unit (ReLU) as an activation function to output the specified duration. For example, the specified duration $T'_{Timer}$ can be obtained based on $T'_{Timer} = \mu(s^{k+1}) = (\theta^{k+1})^T \phi(s^{k+1})$, where $\theta^{k+1} \leftarrow \theta^k + \eta \nabla_\theta \log \pi_\theta(s^k, a^k) A^\pi(s^k, a^k)$ is a strategy parameter vector, and $\varphi(s^{k+1}) = \frac{\sigma^2(s^{k+1})}{a^{k+1} - \mu(s^{k+1})} \nabla_\theta \log \pi(a^{k+1}|s^{k+1})$ is a policy feature vector.

Here, a method for determining the evaluation index based on an evaluation network is provided, which can be implemented based on the action network as shown in FIG. 7. The action network includes an input layer, M hidden layers, and an output layer, and the method can include followings.

Input layer: The input layer can be marked as $\phi'_i$. The input layer is composed of N+1 neural networks, and its input includes state and reward, where the state can be the BWP switching information of the k-th configuration period: $s^k = \{BWP_i^1 \quad BWP_i^2 \quad ... \quad BWP_i^N\}$, and the reward is the reward index $R^k(s^k, a^k)$. The reward can be determined based on an energy-saving time proportion $\alpha = \frac{T_{default}}{T_{interval}}$, where $T_{default}$ is a duration of the second BWP within a configuration period and $T_{interval}$ is a predefined duration corresponding to a configuration period. For example, the reward index corresponding to the k-th configuration period is $R^k(s^k, a^k)$. Each element of the input layer is connected one-to-one with a separate neuron, that is, N neurons are used to transmit N elements in the state set $s^k$, and one neuron is used to transmit $Rk(Sk, a^k)$.

Hidden layer: there are M layers in total, which can be marked as $\phi'_1$, $\phi'_2$, ..., and $\phi'_M$, and the M hidden layers are used to evaluate the mapping relationship between the input and output of the network.

In some embodiments, the first hidden layer $\phi'_1$ is used to mix the state, that is, to mix the BWP switching information of the k-th configuration period. The output of the l-th neuron of the first hidden layer $\phi'_1$ is: $y'_{1,l} = \sum_{j=1}^{N} \omega'_{1,l,j} x'_j + b'_{1,l}$, where $\omega'_{1,l,j}$ is the weight of the connection between the input layer $\phi'_i$ and the l-th neuron of the first hidden layer $\phi'_1$, $x'_j$ is the output of the j-th neuron in the input layer $\phi'_i$, $b'_{1,l}$ is the bias of the l-th neuron of the first hidden layer $\phi'_1$.

The second hidden layer $\phi'_2$ is similar to the first hidden layer $\phi'_1$, but the second hidden layer is used to mix state and reward. The remaining hidden layers, such as the 3rd to M-th hidden layers $\phi'_3$, ..., and $\phi'_M$ approximately mix the relationship between input and output in the form of full connection, that is, the output of the (i-1)-th hidden layer is the input of the i-th hidden layer, where i is an integer greater than 3 and less than or equal to M.

Output layer: the output layer can be marked as $\phi'_o$. The output layer uses a linear rectification unit (ReLU) as an activation function to output the evaluation index for the predefined duration. For example, the evaluation index $V^\pi(s)$ can be obtained based on a state value function:

$$V^\pi(s) = En\{\sum_{k=0}^{\infty} \gamma^k R^k(s^k, a^k) | s^o, \pi(s^k)\}$$

, where $\gamma^k$ is a discount factor, $R^k(s^k, a^k)$ is the reward index, $s^o$ is a given initial state, and $\pi(s^k)$ is a selection strategy of the action network under the state set $s^k$. Here, $V^k(s)$ is the evaluation index of the predefined duration corresponding to the k-th configuration period.

The evaluation index for the predefined duration is obtained as: $A^\pi(s^k,a^k) = R^\pi(s^k, a^k) + \gamma V^\pi(s^{k+1}) - V^\pi(s^k)$, where $R^\pi(s^k, a^k)$ is the reward index, $\gamma$ is the discount factor, $V^\pi(s^{k+1})$ is the evaluation index corresponding to the (k+1)-th configuration period, and $V^\pi(s^k)$ is the evaluation index corresponding to the k-th configuration period. Here, the $A^\pi(s^k, a^k)$ can also be regarded as a time difference error.

Example III

As shown in FIG. 12, some embodiments of this disclosure provide a BWP switching method, which is performed by a base station and may include the following steps.

In step S121, the base station determines, based on the determined specified duration, the BWP switching information of the current configuration period and the energy-saving time proportion of the previous configuration period.

Here, the current configuration period may be considered as the (k+1)-th configuration period, and the previous configuration period may be considered as the k-th configuration period.

In an optional embodiment, the base station determines, based on the determined specified duration, the BWP switching information of the current configuration period as: $s^{k+1}$; and energy-saving time proportion as

$$\alpha = \frac{T_{default}}{T_{interval}}$$

, which can be used as the reward index $R^\pi(s^k, a^k)$ of the action network.

In step S122, the evaluation network of the base station obtains the evaluation indexes for the specified duration of the previous configuration period and the current configuration period by using the BWP switching information of the previous configuration period and the current configuration period.

In an optional embodiment, the evaluation network of the base station uses the previous configuration period and its corresponding reward index to determine the evaluation index of the k-th configuration period as $V^\pi(s^k)$; and determines, based on the evaluation network using the current configuration period and its corresponding reward index, the evaluation index of the (k+1)-th configuration period as $V^\pi(s^{k+1})$.

In step S123, the time difference error is obtained based on the reward indexes and the evaluation indexes for the predefined duration in the previous configuration period and the current configuration period.

In an optional embodiment, the base station determines, based on $V^\pi(s^k)$, $V^\pi(s^{k+1})$ and $R^\pi(s^k, a^k)$, the time difference error as $A^\pi(s^k, a^k) = R^\pi(s^k, a^k) + \gamma V^\pi(s^{k+1}) - V^\pi(s^k)$. Here, the time difference error is the evaluation index, $V^\pi(s^k)$ can be considered as a state value function of the previous state, and $V^\pi(s^{k+1})$ can be considered as a state value function of the current state.

In step S124, the base station stores the specified duration, the energy-saving time proportion, and the BWP switching information of the current configuration period.

In step S125, the evaluation network of the base station obtains the trained time difference error by performing gradient update using an average value of the time difference error.

In an optional embodiment, the evaluation network of the base station performs random gradient update by using the average value of the time difference error as a loss function, which can be expressed as the following formula: $\omega^{k+1} \leftarrow \omega^k + \beta A^\pi(s^k, a^k)$, where $\beta$ represents the learning rate, and $A^\pi(s^k, a^k)$ is the time difference error after training.

In step S126, the action network of the base station obtains a trained selection strategy by performing gradient update on the selection strategy through using the trained time difference error obtained by the evaluation network.

In an optional embodiment, the action network of the base station performs gradient update on the selection strategy based on the trained time difference error obtained by the evaluation network, which can be expressed as the following formula: $\theta^{k+1} \leftarrow \theta^k + \eta \nabla_\theta log \pi_\theta (s^k, a^k) A^\pi(s^k, a^k)$, where $\eta$ represents the learning rate, and $\pi_\theta(s^k, a^k)$ is the selection strategy after training.

It should be noted, those skilled in the art can understand that the methods provided in some embodiments of this disclosure can be executed independently, or together with some methods in other embodiments of this disclosure or some methods in related art.

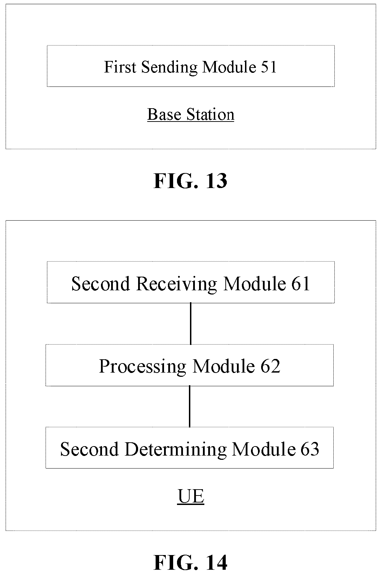

As shown in FIG. 13, a BWP switching apparatus is provided, which is applied to a base station and includes:

a first sending module 51, configured to send timing indication information, where the timing indication information indicates configuration of timing information, and the timing information is used for UE to determine a related operation of BWP switching according to a specified duration indicated by the timing information.

Some embodiments of this disclosure provide a BWP switching apparatus, which is applied to a base station and may include: a first sending module 51 configured to send timing indication information, where the timing indication information indicates configuration of timing information, and the timing information is used for switching to a second BWP when there is no predefined transmission within a specified duration of using a first BWP, where a bandwidth of the second BWP is smaller than a bandwidth of the first BWP.

Some embodiments of this disclosure provide a BWP switching apparatus, which is applied to a base station and may include: a first sending module 51 configured to send timing indication information, where the timing indication information indicates configuration of timing information, where the timing information is used for, when the predefined transmission occurs within the specified duration of using the first BWP, using the first BWP indicated by the predefined transmission or a third BWP of a same type as the first BWP, and re-determining timing of the specified duration, where a bandwidth of the third BWP is greater than the bandwidth of the second BWP.

In some embodiments, the predefined transmission includes at least one of the following:

BWP scheduling information;
service transmission of the first BWP.

In some embodiments, the BWP scheduling information includes at least one of the following:

scheduling information of the first BWP;
scheduling information of the third BWP, where the third BWP and the first BWP belong to the same type of BWPs, and have a larger bandwidth than the second BWP.

In some embodiments, the timing information is used for the UE to switch to a scheduled BWP indicated by BWP scheduling information when the BWP scheduling information occurs within the specified duration of using the first BWP, and to re-determine timing of the specified duration.

Some embodiments of this disclosure provide a BWP switching apparatus, which is applied to a base station and includes: a first sending module 51, configured to send timing indication information, where the timing indication information indicates configuration of timing information, and the timing information is used for the UE to switch to a scheduled BWP indicated by BWP scheduling information when the BWP scheduling information occurs within the specified duration of using the first BWP, and to re-determine timing of the specified duration.

In some embodiments, the timing information is used for the UE to continue operating on the first BWP when there is scheduling information of the first BWP within the specified duration of using the first BWP, and to re-determine timing of the specified duration.

Some embodiments of this disclosure provide a BWP switching apparatus, which is applied to a base station and includes: a first sending module 51, configured to send timing indication information, where the timing indication information indicates configuration of timing information, and the timing information is used for the UE to continue operating on the first BWP when there is scheduling information of the first BWP within the specified duration of using the first BWP, and to re-determine timing of the specified duration.

Some embodiments of this disclosure provide a BWP switching apparatus, which is applied to a base station and includes: a first sending module 51, configured to send DCI carrying the timing indication information.

Some embodiments of this disclosure provide a BWP switching apparatus, which is applied to a base station and includes: a first sending module 51, configured to send RRC signaling carrying the timing indication information.

Some embodiments of this disclosure provide a BWP switching apparatus, which is applied to a base station and includes: a first determining module, configured to determine the specified duration based on BWP switching information of at least one historical configuration period, where the BWP switching information includes: a BWP that the UE switches to when the BWP scheduling information arrives at the UE for at least once.

Some embodiments of this disclosure provide a BWP switching apparatus, which is applied to a base station and includes: a first determining module, configured to determine the specified duration based on BWP switching information in a previous configuration period.

Some embodiments of this disclosure provide a BWP switching apparatus, which is applied to a base station and includes: a first determining module, configured to determine the specified duration based on the BWP switching information and a deep learning model.

Some embodiments of this disclosure provide a BWP switching apparatus, which is applied to a base station and includes:

a first determining module, configured to determine a predefined duration based on the BWP switching information and a selection strategy;
the first determining module is further configured to determine an evaluation index for the predefined duration based on the BWP switching information, the predefined duration, and an evaluation network of the deep learning model; and
the first determining module is further configured to determine the specified duration based on the BWP switching information, the predefined duration, the evaluation index, and an action network of the deep learning model.

Some embodiments of this disclosure provide a BWP switching apparatus, which is applied to a base station and configured to: determine the predefined duration by inputting the BWP switching information into an action network configured with a selection strategy.

Some embodiments of this disclosure provide a BWP switching apparatus, which is applied to a base station and includes:

a first determining module, configured to determine a reward index based on a ratio of a duration of a second BWP to a predefined duration in a historical configuration period;

the first determining module is further configured to obtain an evaluation index for the predefined duration by inputting the BWP switching information and the reward index into the evaluation network.

Some embodiments of this disclosure provide a BWP switching apparatus, which is applied to a base station and includes: a first determining module, configured to obtain the specified duration by inputting the BWP switching information, the predefined duration, and the evaluation index into the action network.

As shown in FIG. 14, some embodiments of this disclosure provide a BWP switching apparatus, which is applied to a UE and includes:

a second receiving module 61, configured to receive timing indication information;
a processing module 62, configured to configure timing information based on the timing indication information; and
a second determining module 63, configured to determine a related operation of BWP switching based on a specified duration indicated by the timing information.

Some embodiments of this disclosure provide a BWP switching apparatus, which is applied to a UE and may include: a second determining module 63, configured to switch, based on the timing information, to a second BWP when determining no predefined transmission occurs within the specified duration of using a first BWP, where a bandwidth of the second BWP is smaller than a bandwidth of the first BWP.

Some embodiments of this disclosure provide a BWP switching apparatus, which is applied to a UE and may include: a second determining module 63, configured to, based on the timing information, when determining the predefined transmission occurs within the specified duration of using the first BWP, use the first BWP indicated by the predefined transmission or a third BWP of a same type as the first BWP, and re-determine timing of the specified duration, where a bandwidth of the third BWP is greater than the bandwidth of the second BWP.

In some embodiments, the predefined transmission includes at least one of the following:

BWP scheduling information;
service transmission of the first BWP.

In some embodiments, the BWP scheduling information includes at least one of the following:

scheduling information of the first BWP;
scheduling information of the third BWP, where the third BWP and the first BWP belong to the same type of BWPs, and have a larger bandwidth than the second BWP.

Some embodiments of this disclosure provide a BWP switching apparatus, which is applied to a UE and includes: a second determining module 63, configured to switch, based on the timing information, when determining there is BWP scheduling information within the specified duration of using the first BWP, to the scheduled BWP indicated by the BWP scheduling information, and redetermine the timing for the specified duration.

Some embodiments of this disclosure provide a BWP switching apparatus, which is applied to a UE and includes: a second determining module 63, configured to switch, based on the timing information, upon determining that there is BWP scheduling information when using the second BWP, to the scheduled BWP indicated by the BWP scheduling information, and start timing for the specified duration.

Some embodiments of this disclosure provide a BWP switching apparatus, which is applied to a UE and includes: a second determining module 63, configured to continue, based on the timing information, operating on the second BWP if there is no predefined transmission when using the second BWP.

Some embodiments of this disclosure provide a BWP switching apparatus, which is applied to a UE and includes: a second receiving module 61, configured to receive DCI carrying the timing indication information.

Some embodiments of this disclosure provide a BWP switching apparatus, which is applied to a UE and includes: a second receiving module 61, configured to receive RRC signaling carrying the timing indication information.

It should be noted, those skilled in the art can understand that the apparatuses provided in some embodiments of this disclosure can be executed independently, or together with some apparatuses in other embodiments of this disclosure or some apparatuses in related art.

Regarding the apparatus in the foregoing embodiments, the specific manner in which each module executes operations has been described in detail in some embodiments related to the method, and will not be described in detail here.

Some embodiments of this disclosure provide a communication device, including:

a processor;
a memory, configured to store executable instructions of the processor,
where the processor is configured to implement the BWP switching method in any embodiment of this disclosure upon running the executable instructions.

In some embodiments, the communication device may be a base station or a UE.

Here, the processor may include various types of storage medium, including non-transitory computer storage medium which can continue to memorize and store information thereon after the UE is powered off.

The processor may be connected to the memory through a bus and the like, for reading the executable program stored on the memory, so as to implement, for example, at least one of the methods shown in FIG. 2, FIG. 5, FIG. 6, and FIG. 9 to FIG. 12.

Some embodiments of this disclosure further provide a computer storage medium, where a computer executable program is stored in the computer storage medium, and when the executable program is executed by a processor, the BWP switching method in any embodiment of this disclosure is implemented. For example, at least one of the methods shown in FIG. 2, FIG. 5, FIG. 6, and FIG. 9 to FIG. 12 is implemented.

With regard to the device or storage medium in the forgoing embodiments, the specific manner in which each module executes operations has been described in detail in some embodiments related to the method, and will not be described in detail here.

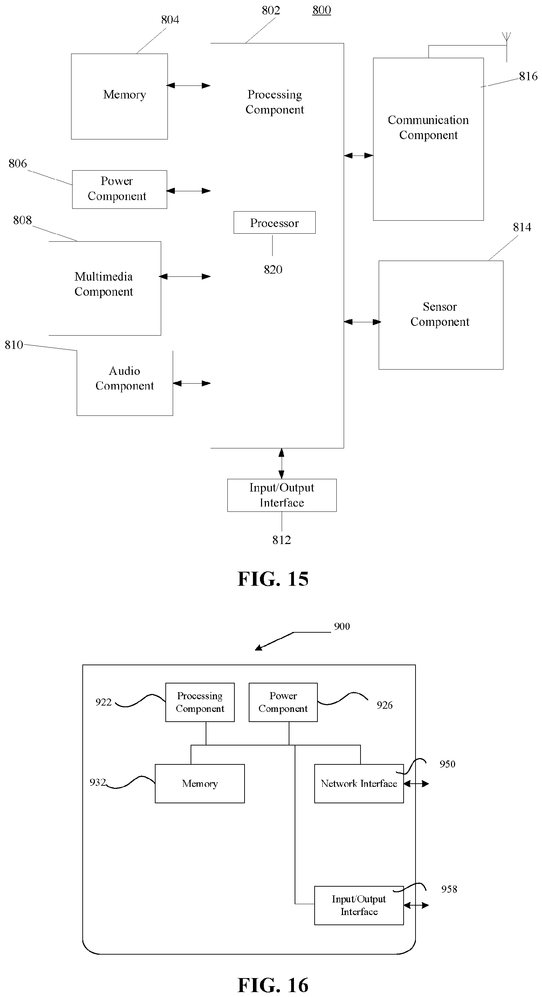

FIG. 15 is a block diagram of a UE 800 according to an exemplary embodiment. For example, the UE 800 may be a mobile phone, a computer, a digital broadcast terminal, a messaging device, a game console, a tablet device, a medical device, a fitness device, a personal digital assistant, and the like.

Referring to FIG. 15, the UE 800 may include one or more of the following components: processing component 802, memory 804, power component 806, multimedia component 808, audio component 810, input/output (I/O) interface 812, sensor component 814, and communication component 816.

The processing component 802 generally controls the overall operation of the UE 800, such as operations associated with display, phone calls, data communications, camera operations, and recording operations. The processing component 802 may include one or more processors 820 to execute instructions to perform all or some of the steps of the methods described above. Additionally, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of such data include instructions, contact data, phonebook data, messages, pictures, videos, and the like for any application or method operating on the UE 800. The memory 804 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic or optical disk.

The power component 806 provides power to various components of the UE 800. The power components 806 may include a power management system, one or more power sources, and other components associated with generating, managing, and distributing power to the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 808 includes a front camera and/or a rear camera. When the UE 800 is in an operation mode, such as a shooting mode or a video mode, the front camera and/or the rear camera may receive external multimedia data. Each of the front and rear cameras may be a fixed optical lens system or have focal length and optical zoom capability.

The audio component 810 is configured to output and/or input audio signals. For example, the audio component 810 includes a microphone (MIC) that is configured to receive external audio signals when the UE 800 is in operating modes, such as calling mode, recording mode, and voice recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, or the like. These buttons may include, but are not limited to: home button, volume buttons, start button, and lock button.

The sensor assembly 814 includes one or more sensors for providing state assessments of various aspects of the UE 800. For example, the sensor assembly 814 can detect the open/closed state of the UE 800, the relative positioning of components, such as the display and keypad of the UE 800. The sensor assembly 814 can also detect a change in the position of the UE 800 or a component of the UE 800, the presence or absence of user contact with the UE 800, the orientation or acceleration/deceleration of the UE 800, and the temperature change of the UE 800. The sensor assembly 814 may include a proximity sensor configured to detect the presence of nearby objects in the absence of any physical contact. The sensor assembly 814 may also include a light sensor, such as a CMOS or CCD image sensor, for use in imaging applications. In some embodiments, the sensor assembly 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 may access wireless networks based on communication standards, such as WiFi, 4G or 5G, or a combination thereof. In some embodiments, the communication component 816 receives broadcast signals or broadcast related information from an external broadcast management system via a broadcast channel. In some embodiments, the communication component 816 also includes a near field communication (NFC) module to facilitate short-range communication. For example, the NFC module may be implemented based on radio frequency identity (RFID) technology, infrared data association (IrDA) technology, ultra-wideband (UWB) technology, Bluetooth (BT) technology and other technologies.

In some embodiments, the UE 800 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component, which are configured to perform the forgoing methods.

In some embodiments, there is also provided a non-transitory computer-readable storage medium including instructions, such as the memory 804 including instructions, executable by the processor 820 of the UE 800 to perform the method described above. For example, the non-transitory computer-readable storage medium may be ROM, random access memory (RAM), CD-ROM, magnetic tape, floppy disk, optical data storage device, and the like.

As shown in FIG. 16, an embodiment of this disclosure illustrates a structure of a base station. For example, the base station 900 may be provided as a network side device. Referring to FIG. 16, the base station 900 includes a processing component 922, which further includes one or more processors; and a memory resource represented by a memory 932, which is used for storing instructions executable by the processing component 922, such as application programs. The application programs stored in memory 932 may include one or more modules each corresponding to a set of instructions. In addition, the processing component 922 is configured to execute instructions, so as to perform any of the forgoing methods applied to the base station.

The base station 900 may also include a power component 926 configured to perform power management of the base station 900, a wired or wireless network interface 950 configured to connect the base station 900 to a network, and an I/O interface 958. The base station 900 can operate based on an operating system stored in the memory 932, such as Windows Server™, Mac OS X™, Unix™, Linux™, FreeBSD™ or the like.

Other embodiments of the invention will be readily apparent to those skilled in the art from consideration of the specification and practice of the invention disclosed herein. This disclosure is intended to cover any modification, use or adaptation of the present invention, which follow the general principles of the present invention and include common knowledge or conventional technical means in the art not disclosed in this disclosure. The specification and examples are to be considered exemplary only, with a true scope and spirit of the invention being indicated by the following claims.

It should be understood that the present invention is not limited to the precise constructions which have been described above and shown in the accompanying drawings, and various modifications and changes may be made without departing from the scope thereof. The scope of the invention is limited only by the appended claims.

**Claims**

1. A bandwidth part (BWP) switching method, performed by a base station, comprising:
   sending timing indication information, wherein the timing indication information indicates configuration of timing information, and the timing information is used for user equipment (UE) to determine a related operation of BWP switching according to a specified duration indicated by the timing information.

2. The method according to claim 1, further comprising:
   determining the specified duration based on BWP switching information of at least one historical configuration period, wherein the BWP switching information comprises: a BWP to which the UE switches when BWP scheduling information arrives at the UE for at least one time.

3. The method according to claim 2, wherein said determining the specified duration based on the BWP switching information of at least one historical configuration period comprises:
   determining the specified duration based on the BWP switching information and a deep learning model.

4. The method according to claim 3, wherein said determining the specified duration based on the BWP switching information and the deep learning model comprises:

   determining a predefined duration based on the BWP switching information and a selection strategy;
   determining an evaluation index for the predefined duration based on the BWP switching information, the predefined duration, and an evaluation network of the deep learning model; and
   determining the specified duration based on the BWP switching information, the predefined duration, the evaluation index, and an action network of the deep learning model.

5. The method according to claim 1, wherein said determining the related operation of BWP switching according to the specified duration indicated by the timing information comprises one of following:

switching to a second BWP when no predefined transmission occurs within the specified duration of using a first BWP, wherein a bandwidth of the second BWP is smaller than a bandwidth of the first BWP; or
when the predefined transmission occurs within the specified duration of using the first BWP, using the first BWP indicated by the predefined transmission or a third BWP of a same type as the first BWP, and re-determining timing of the specified duration, wherein a bandwidth of the third BWP is greater than the bandwidth of the second BWP.

6. The method according to claim 1, wherein said sending the timing indication information comprises one of following:

sending downlink control information (DCI) carrying the timing indication information; or
sending radio resource control (RRC) signaling carrying the timing indication information.

7. A bandwidth part (BWP) switching method, performed by user equipment (UE), comprising:

receiving timing indication information;
configuring timing information based on the timing indication information; and
determining a related operation of BWP switching based on a specified duration indicated by the timing information.

8. The method according to claim 7, wherein said determining the related operation of BWP switching based on the specified duration indicated by the timing information comprises one of following:

based on the timing information, switching to a second BWP when determining no predefined transmission occurs within the specified duration of using a first BWP, wherein a bandwidth of the second BWP is smaller than a bandwidth of the first BWP; or
based on the timing information, when determining the predefined transmission occurs within the specified duration of using the first BWP, using the first BWP indicated by the predefined transmission or a third BWP of a same type as the first BWP, and re-determining timing of the specified duration, wherein a bandwidth of the third BWP is greater than the bandwidth of the second BWP.

9. The method according to claim 1, wherein said receiving the timing indication information comprises one of following:

receiving downlink control information (DCI) carrying the timing indication information; or
receiving (RRC) signaling carrying the timing indication information.

10. A bandwidth part (BWP) switching apparatus, applied in a base station, comprising:
a first sending module, configured to send timing indication information, wherein the timing indication information indicates configuration of timing information, and the timing information is used for user equipment (UE) to determine a related operation of BWP switching according to a specified duration indicated by the timing information.

11. A bandwidth part (BWP) switching apparatus, applied in user equipment (UE), comprising:

a second receiving module, configured to receive timing indication information;
a processing module, configured to configure timing information based on the timing indication information; and
a second determining module, configured to determine a related operation of BWP switching based on a specified duration indicated by the timing information.

12. A communication device, comprising:

a processor; and
a memory, configured to store executable instructions of the processor,
wherein the processor is configured to, upon running the executable instructions, implement the bandwidth part (BWP) switching method according to any one of claims 1 to 6 or according to any one of claims 7 to 9.

13. A computer storage medium, storing a computer-executable program which, upon being executed by a processor, is used for implementing the bandwidth part (BWP) switching method according to any one of claims 1 to 6 or according to any one of claims 7 to 9.

**FIG. 1**

| Base Station | | UE |
|---|---|---|
| | S21. Send timing indication information, the timing indication information indicating configuration timing information, and the timing information being used for determining, by a UE according to a specified duration indicated by the timing information, a related operation for BWP switching → | |

**FIG. 2**

| Predefined transmission arrives (BWP₁) | | Predefined transmission arrives (BWP₂) | | Predefined transmission arrives (BWP₂) | |
|---|---|---|---|---|---|

| DCI | Active BWP$_1$ | Default BWP$_m$ | DCI | Active BWP$_2$ | DCI | Active BWP$_2$ | ... |
|---|---|---|---|---|---|---|---|

**FIG. 3**

Predefined transmission arrives (BWP₂)  Predefined transmission arrives (BWP₂)  Predefined transmission arrives (BWP₃)

| DCI | Active BWP₁ | DCI | Active BWP₂ | Default BWP_m | ... | Default BWP_m | DCI | Active BWP₂ | ... |

T<T'    T=T'    T=T'

**FIG. 4**

| Base Station | UE |

Wireless Communication

S51. Determine the specified duration based on historical BWP switching information of at least one configuration period, where the BWP switching information includes: a BWP to which the UE switches when BWP scheduling information arrives at the UE for at least one time

**FIG. 5**

| Base Station | UE |

Wireless Communication

S61. Determine the specified duration based on the BWP switching information and a deep learning model

**FIG. 6**

FIG. 7

FIG. 8

| Base Station | | UE |
|---|---|---|

S91. Receive timing indication information →

S92. Configure timing information based on the timing indication information

S93. Determine a related operation of BWP switching based on a specified duration indicated by the timing information

**FIG. 9**

S101. Base station sends to UE a DCI carrying BWP scheduling information, where the BWP scheduling information indicates a scheduled activated BWP

↓

S102. UE configures the activated BWP based on DCI

↓

S103. UE starts a timer

↓

S104. UE detects whether DCI is received before the timer expires

Yes →

No ↓

S105. UE switches to a default BWP

**FIG. 10**

S111. If base station determines that the number of times the BWP scheduling information arrives at UE reaches N times, it is determined as a configuration period

S112. Base station obtains the BWP switching information of at least one configuration period

S113. Base station determines the specified duration based on the BWP switching information of at least one configuration period and a reinforcement learning model

S114. Base station sends DCI to UE, where the DCI carries timing information indicating the specified duration, and the timing information is used for UE to update the specified duration of using the activated BWP

## FIG. 11

S121. Base station determines BWP switching information of the current configuration period and energy-saving time proportion of the previous configuration period based on the predefined duration as determined

S122. Evaluation network of base station obtains, by using BWP switching information of the previous and current configuration periods, evaluation indicators of the previous and current configuration periods for the predefined duration

S123. Obtain the time difference error based on the evaluation indicators and reward indicators of the previous and current configuration periods for the predefined duration

S124. Base station stores specified duration, energy-saving time proportion, and BWP switching information of the current configuration period

S125. Evaluation network of base station obtains a trained time difference error by using average value of the time difference error to perform gradient update

S126. Action network of base station obtains a trained selection strategy by using the trained time difference error, obtained by the evaluation network, to perform gradient update on the selection strategy

## FIG. 12

First Sending Module 51

Base Station

**FIG. 13**

Second Receiving Module 61

Processing Module 62

Second Determining Module 63

UE

**FIG. 14**

**FIG. 15**

**FIG. 16**

## INTERNATIONAL SEARCH REPORT

International application No.

**PCT/CN2021/143935**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; 3GPP: 切换, 转换, 部分带宽, 时长, 时间, 下行控制指示, 无线连接, 业务, 历史, 激活, switch, handover, BWP, length, time, DCI, RRC, data, history, activ+

### C. DOCUMENTS CONSIDERED TO BE RELEVANT

| Category* | Citation of document, with indication, where appropriate, of the relevant passages | Relevant to claim No. |
|---|---|---|
| X | CN 112584506 A (HUAWEI TECHNOLOGIES CO., LTD.) 30 March 2021 (2021-03-30) description, paragraphs 104-150, and figure 3 | 1-13 |
| X | CN 108886804 A (BEIJING XIAOMI MOBILE SOFTWARE CO., LTD.) 23 November 2018 (2018-11-23) description, paragraphs 69-84 | 1, 6-7, 9-13 |
| X | CN 109804662 A (BEIJING XIAOMI MOBILE SOFTWARE CO., LTD.) 24 May 2019 (2019-05-24) description, paragraphs 116-150 | 1, 6-7, 9-13 |
| A | CN 111587600 A (NOKIA SHANGHAI BELL CO., LTD.) 25 August 2020 (2020-08-25) entire document | 1-13 |
| A | CN 112351496 A (HUAWEI TECHNOLOGIES CO., LTD.) 09 February 2021 (2021-02-09) entire document | 1-13 |
| A | CN 109803422 A (SPREADTRUM COMMUNICATIONS SHANGHAI INC.) 24 May 2019 (2019-05-24) entire document | 1-13 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 May 2022** | **17 June 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/143935**

## C. DOCUMENTS CONSIDERED TO BE RELEVANT

| Category* | Citation of document, with indication, where appropriate, of the relevant passages | Relevant to claim No. |
|---|---|---|
| A | CN 111432478 A (TELECOMMUNICATIONS TECHNOLOGY RESEARCH INSTITUTE CO., LTD.) 17 July 2020 (2020-07-17)<br>entire document | 1-13 |
| A | US 2021234764 A1 (DATANG MOBILE COMMUNICATIONS EQUIPMENT CO., LTD.) 29 July 2021 (2021-07-29)<br>entire document | 1-13 |

Form PCT/ISA/210 (second sheet) (January 2015)

INTERNATIONAL SEARCH REPORT
Information on patent family members

International application No.

**PCT/CN2021/143935**

| Patent document cited in search report | | | Publication date (day/month/year) | Patent family member(s) | | | Publication date (day/month/year) |
|---|---|---|---|---|---|---|---|
| CN | 112584506 | A | 30 March 2021 | WO | 2021063265 | A1 | 08 April 2021 |
| CN | 108886804 | A | 23 November 2018 | EP | 3806527 | A1 | 14 April 2021 |
| | | | | WO | 2020000176 | A1 | 02 January 2020 |
| | | | | US | 2021105776 | A1 | 08 April 2021 |
| | | | | IN | 202147000643 | A | 15 January 2021 |
| | | | | EP | 3806527 | A4 | 19 January 2022 |
| | | | | CN | 108886804 | B | 01 February 2022 |
| CN | 109804662 | A | 24 May 2019 | WO | 2020142905 | A1 | 16 July 2020 |
| CN | 111587600 | A | 25 August 2020 | WO | 2019136684 | A1 | 18 July 2019 |
| CN | 112351496 | A | 09 February 2021 | WO | 2021027520 | A1 | 18 February 2021 |
| CN | 109803422 | A | 24 May 2019 | CN | 109803422 | B | 15 May 2020 |
| CN | 111432478 | A | 17 July 2020 | | None | | |
| US | 2021234764 | A1 | 29 July 2021 | KR | 20210014735 | A | 09 February 2021 |
| | | | | WO | 2019233205 | A1 | 12 December 2019 |
| | | | | CN | 110557836 | A | 10 December 2019 |
| | | | | EP | 3806563 | A1 | 14 April 2021 |
| | | | | IN | 202027054603 | A | 12 March 2021 |
| | | | | EP | 3806563 | A4 | 14 July 2021 |

Form PCT/ISA/210 (patent family annex) (January 2015)